# EUROPÄISCHE PATENTSCHRIFT

(11) **EP 2 678 280 B1**
(45) Veröffentlichungstag und Bekanntmachung des Hinweises auf die Patenterteilung: **03.05.2017**
(21) Anmeldenummer: 12704510.2
(22) Anmeldetag: 10.02.2012
(51) Int. Cl.: C03B 19/10, C01B 33/193

(54) **HERSTELLUNGSVERFAHREN EINES HOCHREINEN SILICIUMDIOXIDGRANULATS FÜR QUARZGLASANWENDUNGEN**
METHOD FOR PRODUCING HIGH-PURITY SILICON DIOXIDE GRANULES FOR QUARTZ GLASS APPLICATIONS
MÉTHODE DE FABRICATION DE GRANULÉS DE DIOXYDE DE SILICIUM DE HAUTE PURETÉ POUR UTILISATIONS POUR DU VERRE DE SILICE

(30) Priorität: 22.02.2011 DE 102011004532
(43) Veröffentlichungstag der Anmeldung: 01.01.2014
(73) Patentinhaber: Evonik Degussa GmbH, 45128 Essen (DE)
(72) Erfinder: PANZ, Christian, 50389 Wesseling-Berzdorf (DE); TITZ, Guido, 52396 Heimbach (DE); MÜLLER, Sven, 53125 Bonn (DE); RUF, Markus, 53347 Alfter-Witterschlick (DE); FRINGS, Bodo, 33758 Schloß Holte (DE); RAULEDER, Hartwig, 79618 Rheinfelden (DE); BEHNISCH, Jürgen, 53359 Rheinbach (DE)
(86) Internationale Anmeldenummer: PCT/EP2012/052251
(87) Internationale Veröffentlichungsnummer: WO 2012/113655

(56) Entgegenhaltungen:
- EP-A1- 1 561 727
- EP-A2- 0 385 753
- EP-A2- 0 474 158
- WO-A1-2010/037702
- WO-A1-2010/037705
- DE-A1- 10 058 616
- JP-A- 62 012 608
- JP-A- 2001 192 225
- US-A- 4 973 462

## Beschreibung

Die Erfindung betrifft ein Verfahren zur Herstellung von hochreinem Siliciumdioxidgranulat.

Bestimmte Glasanwendungen und insbesondere die Quarzglasanwendungen erfordern eine hohe Reinheit des eingesetzten Siliciumdioxids, verbunden mit minimalen Gehalten an Blasen bzw. OH-Gruppen im fertigen Glaserzeugnis.

Es sind zahlreiche Methoden zur Herstellung von Granulaten ausgehend von amorphem Siliciumdioxid bekannt. Geeignete Ausgangsmaterialien können durch Sol-Gel-Verfahren hergestelltes Siliciumdioxid, Fällungskieselsäure oder ein pyrogen hergestelltes Siliciumdioxid sein. Die Herstellung umfasst gewöhnlich eine Agglomeration des Siliciumdioxides. Dies kann mittels Nassgranulierung erfolgen. Bei der Nassgranulierung wird aus einer kolloidalen Siliciumdioxid-Dispersion durch ständiges Mischen oder Rühren ein Sol und daraus unter allmählichem Entzug der Feuchte eine krümelige Masse erzeugt. Die Herstellung mittels Nassgranulierung ist aufwändig und teuer, insbesondere wenn hohe Ansprüche an den Reinheitsgrad des Granulates gestellt werden.

Es ist weiterhin möglich, Granulate durch Kompaktierung von Siliciumdioxid zu erhalten. Die bindemittelfreie Kompaktierung von pyrogen hergestelltem Siliciumdioxid ist schwierig, weil pyrogen hergestelltes Siliciumdioxid sehr trocken ist, und keine Kapillarkräfte die Partikelbindung herbeiführen können. Pyrogen hergestellte Siliciumdioxide zeichnen sich durch eine extreme Feinteiligkeit, ein niedriges Schüttgewicht, hohe spezifische Oberfläche, sehr hohe Reinheit, weitestgehend sphärische Primärpartikelform und das Fehlen von Poren aus. Das pyrogen hergestellte Siliciumdioxid weist häufig eine hohe Oberflächenladung auf, die die Agglomeration elektrostatisch erschwert.

Dennoch stellt die Kompaktierung von pyrogen hergestelltem Siliciumdioxid mangels Alternative bislang den bevorzugten Weg zur Herstellung von Siliciumdioxidgranulaten, die auch Kieselgläser genannt werden, dar.

In US4042361 wird ein Verfahren zur Herstellung von Kieselglas offenbart, bei dem pyrogen hergestelltes Siliciumdioxid eingesetzt wird. Dieses wird in Wasser unter Bildung einer gießbaren Dispersion einarbeitet, nachfolgend das Wasser thermisch entfernt, der stückige Rückstand bei 1150 bis 1500°C calciniert und anschließend in 1 -100 µm - große Granulate vermahlen und verglast. Die Reinheit des so hergestellten Kieselglases ist für heutige Anwendungen nicht ausreichend. Das Herstellverfahren ist aufwändig und teuer.

Auch in WO91/13040 wird ein Verfahren offenbart, bei dem pyrogen hergestelltes Siliciumdioxid zur Herstellung von Kieselglas eingesetzt wird. Das Verfahren umfasst das Bereitstellen einer wässrigen Dispersion von pyrogenem Siliciumdioxid mit einem Feststoffgehalt von etwa 5 bis etwa 55 Gew.-%, das Überführen der wässrigen Dispersion in poröse Teilchen, indem man sie in einem Ofen bei einer Temperatur zwischen etwa 100°C und etwa 200°C trocknet und den porösen Rückstand zerkleinert. Anschließend erfolgt eine Sinterung der porösen Teilchen in einer Atmosphäre mit einem Wasserdampf-Partialdruck im Bereich von 0,2 bis 0,8 Atmosphären bei Temperaturen unterhalb etwa 1200°C. Es werden hochreine Kieselglasgranulate mit einem Teilchendurchmesser von etwa 3 bis 1000 µm, einer Stickstoff-BET-Oberfläche von weniger als etwa 1 m²/g und einem Gesamtgehalt an Verunreinigungen von weniger als etwa 50 ppm erhalten, wobei der Gehalt an Metallverunreinigung weniger als 15 ppm beträgt.

Die WO 2010/037702 beschreibt ein Verfahren zur Herstellung von hochreinem Siliciumdioxid, wobei ein Säuerungsmittel vorgelegt wird und eine Silikatlösung bei einem pH-Wert von kleiner 2 zugegeben wird.

Die EP-A-1717202 offenbart ein Verfahren zur Herstellung von Kieselglasgranulat, bei dem ein pyrogen hergestelltes Siliciumdioxid, welches nach einem bestimmten Verfahren auf Stampfdichten von 150 bis 800 g/l kompaktiert wurde, gesintert wird. Die betreffende, in der DE-A-19601415 offenbarte Kompaktierung ist eine Sprühtrocknung von in Wasser dispergiertem Siliciumdioxid mit nachfolgender Temperung bei 150 bis 1100°C. Das so erhaltene Granulat kann gesintert werden, liefert jedoch keine blasenfreien Kieselglasgranulate.

Auch Verfahren zur Herstellung von Siliciumdioxidgranulaten, die auf Sol-Gel-Prozesse zurückgehen, sind bekannt.

Die EP-A-1258456 offenbart beispielsweise ein Verfahren zur Herstellung eines monolithischen Glasformkörpers, bei dem man ein Siliciumalkoxid hydrolysiert und nachfolgend unter Bildung eines Sols ein pyrogen hergestelltes Siliciumdioxidpulver hinzugibt; das entstandene Sol wird dann in ein Gel überführt, dieses getrocknet und abschließend sintert.

Ebenfalls auf Sol-Gel-Prozessen basierende Verfahren, bei denen Siliciumalkoxide und pyrogen hergestelltes Siliciumdioxidpulver eingesetzt werden, offenbart die Schrift EP-A-1283195.

Prinzipiell folgen die letztgenannten Verfahren alle dem gleichen Schema. Zunächst wird ein Alkoxid hydrolysiert, wobei Siliciumdioxid unter Bildung eines Soles entsteht, welches in ein Gel überführt wird, das getrocknet und abschließend gesintert wird. Die betreffenden Verfahren umfassen mehrere Stufen, sind langwierig, empfindlich im Hinblick auf Prozessschwankungen und anfällig für Verunreinigungen. Hinzu kommt, dass bei den mit Sol-Gel-Prozessen erhältlichen Produkten höhere Mengen an störenden Silanol-Gruppen im fertigen Glaskörper verbleiben und dort zur Bildung unerwünschter Blasen führen.

Die ebenfalls mögliche Herstellung unter Verwendung von Chlorsilanen hat den Nachteil, dass erhöhte Konzentrationen von Chlor-Gruppen im Glas auftreten, die für bestimmte Anwendungsgebiete von Quarzglas-Erzeugnissen nicht tolerierbar sind. Auch die Rückstände organischer Reste von Alkyl- bzw. Aryl-Silanen können im fertigen Glaskörper zu Problemen, wie Blackspots oder Blasenbildung führen. Bei derartigen Silica-Qualitäten muss der Kohlenstoff-Anteil durch eine aufwendige oxidative Behandlung (z.B. beschrieben in der DE69109026) und der Silanol-Gruppen-Gehalt energie- und kostenintensiv mit korrosiven Chlorierungsmitteln reduziert werden (z.B. beschrieben in der US3459522).

Bei sehr hohen Reinheitsanforderungen ist prinzipiell die Verwendung hydrothermal gezüchteten Siliciumdioxids möglich. Die Wachstumsgeschwindigkeit dieser Quarz-Qualitäten ist aber derartig niedrig, dass die Preise für die beabsichtigten Quarzglas-Anwendungen nicht akzeptabel sind.

Die Verwendung bestimmter aufbereiteter Naturquarze, z.B. des IOTA-Grades der Firma Unimin, gewährleistet zwar hohe Reinheiten und niedrige Silanolgruppen-Gehalte, es gibt weltweit jedoch nur sehr wenige Lagerstätten, die über eine ausreichend hohe Qualität verfügen. Die knappe Versorgungssituation führt zu hohen Preisen, die für normale Quarzglas-Anwendungen ebenfalls nicht vertretbar sind.

Eine Aufgabe der vorliegenden Erfindung war es daher, ein kostengünstiges Verfahren zur Herstellung von hochreinen Siliciumdioxidgranulaten für Quarzglasanwendungen bereitzustellen.

Eine weitere Aufgabe bestand darin sicherzustellen, dass sich die betreffenden Granulate bzw. die mit ihnen erhältlichen Erzeugnisse für Quarzglasanwendungen eignen; in diesem Zusammenhang ist insbesondere ein geringer Gehalt an Silanolgruppen erforderlich, da dieser das Ausmaß der unerwünschten Blasenbildung im Rahmen der Herstellung des Glaskörpers maßgeblich beeinflusst.

Bei den betreffenden Forschungsarbeiten wurde festgestellt, dass herkömmliche billige Wasserglasqualitäten in stark saurem Medium zu hochreinen Silica-Typen reagieren, deren Behandlung mit einer Base zu Produkten führt, die sich zu Glaskörpern mit niedrigen Silanolgruppen-Gehalten weiterverarbeiten lassen.

Gelöst werden die vorgenannten und weitere sich aus dem Stand der Technik ergebende Aufgaben durch ein Verfahren nach Anspruch 1. Vorteilhafte Ausführungsformen bzw. Ausgestaltungen der Erfindung können den Unteransprüchen und der Beschreibung entnommen werden.

Die Erfindung kann in die Verfahrensschritte a. bis j. gegliedert werden, wobei deren Durchführung teilweise nicht zwingend erfolgen muss; insbesondere kann auf die Trocknung des in Schritt c. erhaltenen Siliciumoxids (Schritt f.) optional verzichtet werden. Kursorisch kann das erfindungsgemäße Verfahren folgendermaßen dargestellt werden:
a. Herstellung einer Vorlage aus einem Säuerungsmittel mit einem pH-Wert von kleiner 2,0, bevorzugt kleiner 1,5, besonders bevorzugt kleiner 1,0, ganz besonders bevorzugt kleiner 0,5
b. Bereitstellen einer Silikatlösung, wobei die Viskosität zur Herstellung des durch Fällung gereinigten Siliciumoxids vorteilhaft in bestimmten Viskositätsbereichen eingestellt werden kann; die Viskosität beträgt von 0,1 bis 10000 dPa.s (Poise), wobei sich dieser Viskositätsbereich je nach Verfahrensführung - wie nachstehend dargelegt - bedingt durch weitere Verfahrensparameter weiter auffächern kann
c. Zugabe der Silikatlösung aus Schritt b. in die Vorlage aus Schritt a. derart, dass der pH-Wert der erhaltenen Fällsuspension jederzeit unter 2,0, bevorzugt unter 1,5, besonders bevorzugt unter 1,0 und ganz besonders bevorzugt unter 0,5 beträgt
d. Abtrennen und Waschen des erhaltenen Siliciumdioxids, wobei das Waschmedium einen pH-Wert kleiner 2,0, bevorzugt kleiner 1,5, besonders bevorzugt kleiner 1,0 und ganz besonders bevorzugt kleiner 0,5 aufweist
e. Neutralwaschen des Siliciumdioxids mit VE-Wasser bis dessen Leitfähigkeit einen Wert von unter 100 µS, bevorzugt von unter 10 µS, aufweist
f. Trocknen des erhaltenen Siliciumdioxids
g. Behandlung des Siliciumdioxids mit einer Base
h. Waschen des Siliciumdioxids mit VE-Wasser, Trocknen und Zerkleinern des getrockneten Rückstandes
i. Sieben des erhaltenen Siliciumdioxid-Granulats auf eine Korngrößen-Fraktion im Bereich von 200-1000 µm, bevorzugt von 200-600 µm, besonders bevorzugt von 200-400 µm und speziell von 250-350 µm
j. Sintern der Siliciumdioxid-Fraktion bei mindestens 600°C, bevorzugt bei mindestens 1000°C und besonders bevorzugt bei mindestens 1200°C

Erfindungsgemäß muss das nachfolgend Fällsäure genannte Medium, in welches das in wässriger Phase gelöste Siliciumoxid, insbesondere eine Wasserglaslösung, gemäß Verfahrensschritt c. zugetropft wird, immer stark sauer reagieren. Als stark sauer wird ein pH-Wert unterhalb 2,0, insbesondere unter 1,5, bevorzugt unter 1,0 und besonders bevorzugt unter 0,5 verstanden. Eine Kontrolle des pH-Werts in der Hinsicht, dass der pH-Wert nicht zu sehr schwankt, um reproduzierbare Produkte zu erhalten, kann angestrebt werden. Wird ein konstanter bzw. weitgehend konstanter pH-Wert angestrebt, so sollte der pH-Wert nur eine Schwankungsbreite von plus/minus 1,0 insbesondere von plus/minus 0,5, bevorzugt von plus/minus 0,2 zeigen.

Bevorzugt als Fällsäuren eingesetzte Säuerungsmittel sind Salzsäure, Phosphorsäure, Salpetersäure, Schwefelsäure, Chlorsulfonsäure, Sulfurylchlorid, Perchlorsäure , Ameisensäure und/oder Essigsäure in konzentrierter oder verdünnter Form oder Gemische der vorgenannten Säuren. Besonders bevorzugt sind die zuvor genannten anorganischen Säuren, also Mineralsäuren, und unter diesen insbesondere Schwefelsäure.

Ein mehrfaches Behandeln des Fällprodukts mit (Fäll-)Säure, also wiederholtes saures Waschen des Fällprodukts, ist erfindungsgemäß bevorzugt. Das saure Waschen kann dabei auch mit verschiedenen Säuren unterschiedlicher Konzentration und bei unterschiedlichen Temperaturen erfolgen. Die Temperatur der sauren Reaktionslösung wird während der Zugabe der Silikatlösung bzw. der Säure durch Heizen oder Kühlen auf 20 bis 95°C, bevorzugt auf 30 bis 90°C, besonders bevorzugt auf 40 bis 80°C gehalten.

Waschmedien können bevorzugt wässrige Lösungen organischer und/oder anorganischer wasserlöslicher Säuren, wie z.B. der zuvor genannten Säuren oder von Fumarsäure, Oxalsäure oder anderen dem Fachmann bekannten organischen Säuren sein, die selbst nicht zur Verunreinigung des gereinigten Siliciumoxids beitragen, weil sie vollständig mit hochreinem Wasser entfernt werden können. Generell sind daher wässrige Lösungen aller organischen (wasserlöslichen) Säuren, insbesondere bestehend aus den Elementen C, H und O, sowohl als Fällsäuren, als auch als Waschmedien geeignet, wenn sie selbst nicht zu einer Verunreinigung des Siliciumoxids führen.

Das Waschmedium kann bei Bedarf auch ein Gemisch aus Wasser und organischen Lösemitteln umfassen. Zweckmäßige Lösemittel sind hochreine Alkohole, wie Methanol, Ethanol, Propanol oder Isopropanol.

Beim erfindungsgemäßen Verfahren ist es normalerweise nicht notwendig, im Rahmen der Fällung oder der sauren Aufreinigung Chelatisierungsmittel zuzugeben. Dennoch umfasst die vorliegende Erfindung als besondere Ausführungsform auch die unter Verwendung von Komplexbildnern vorgenommene Entfernung von Metall-Verunreinigungen aus der Fäll- bzw. Waschsäure, wofür die Komplexbildner bevorzugt - aber nicht zwingend - auf einer Festphase immobilisiert eingesetzt werden. Ein Beispiel für einen erfindungsgemäß einsetzbaren Metall-Komplexbildner ist EDTA (Ethylendiamintetraacetat). Als Indikator bzw. farblicher Marker für unerwünschte Metallverunreinigungen kann auch ein Peroxid zugesetzt werden. Beispielsweise können der Fällsuspension oder dem Waschmedium Hydroperoxide zugesetzt werden, um vorhandene Titan-Verunreinigungen farblich kenntlich zu machen.

Die wässrige Siliciumoxidlösung ist eine Alkali- und/oder Erdalkalisilikatlösung, bevorzugt eine Wasserglaslösung. Derartige Lösungen können kommerziell erworben oder durch Auflösung fester Silicate hergestellt werden. Des Weiteren können die Lösungen aus einem Aufschluss von Siliciumdioxid mit Alkali-Carbonaten erhalten werden oder über ein Hydrothermalverfahren bei erhöhter Temperatur direkt aus Siliciumdioxid, Alkalihydroxid und Wasser hergestellt werden. Das Hydrothermalverfahren kann gegenüber dem Soda- oder Pottascheverfahren bevorzugt sein, weil es zu reineren gefällten Siliciumdioxiden führen kann. Ein Nachteil des Hydrothermalverfahrens ist die begrenzte Bandbreite an erhältlichen Modulen, beispielsweise beträgt das Modul von SiO₂ zu Na₂O bis zu 2, wobei bevorzugte Module bei 3 bis 4 liegen; zudem müssen die Wassergläser nach dem Hydrothermalverfahren in der Regel vor einer Fällung aufkonzentriert werden. Generell ist dem Fachmann die Herstellung von Wasserglas als solches bekannt. In einer speziellen Ausführungsform wird eine wässrige Lösung von Wasserglas, insbesondere Natriumwasserglas oder Kaliumwasserglas, vor der erfindungsgemäßen Verwendung filtriert und anschließend, sofern notwendig, aufkonzentriert. Die gegebenenfalls zur Abtrennung fester, ungelöster Bestandteile erfolgende Filtration der Wasserglaslösung bzw. der wässrigen Lösung von Silikaten kann nach bekannten Verfahren und unter Verwendung dem Fachmann bekannter Vorrichtungen erfolgen.

Die Silikatlösung weist vor der sauren Fällung einen Siliciumdioxidgehalt von vorzugsweise mindestens 10 Gew.-% auf. Erfindungsgemäß wird eine Silikatlösung, insbesondere eine Natriumwasserglaslösung, zur sauren Fällung eingesetzt, deren Viskosität von 0,1 bis 10000 dPa.s (Poise), bevorzugt von 0,2 bis 5000 dPa.s (Poise), besonders bevorzugt von 0,3 bis 3000 dPa.s (Poise) und ganz besonders bevorzugt 0,4 bis 1000 dPa.s (Poise) beträgt (bei Raumtemperatur, 20°C).

Bevorzugt wird zur Vornahme der Fällung eine hochviskose Wasserglaslösung in ein Säuerungsmittel gegeben, wobei sich eine sauer reagierende Fällsuspension bildet. In einer besonderen Ausführungsform des erfindungsgemäßen Verfahrens werden Silikat- bzw. Wasserglaslösungen eingesetzt, deren Viskosität etwa 5 dPa.s (Poise), bevorzugt mehr als 5 dPa.s (Poise) beträgt (bei Raumtemperatur, 20°C).

In einer weiteren speziellen Ausführungsform werden Silikat- bzw. Wasserglaslösungen eingesetzt, deren Viskosität etwa 2 dPa.s (Poise), bevorzugt weniger als 2 dPa.s (Poise) beträgt (bei Raumtemperatur, 20°C).

Die erfindungsgemäß verwendeten Siliciumoxid- bzw. Silikatlösungen weisen vorzugsweise ein Modul auf, also ein Gewichtsverhältnis von Metalloxid zu Siliciumdioxid, das 1,5 bis 4,5, bevorzugt 1,7 bis 4,2 und besonders bevorzugt 2,0 bis 4,0 beträgt.

Die in Verfahrensschritt g. zur basischen Behandlung des Siliciumdioxids einsetzbaren Substanzen sind vielfältig. Bevorzugt werden Basen eingesetzt, die entweder selbst flüchtig sind bzw. bei Raumtemperatur einen im Vergleich zu Wasser erhöhten Dampfdruck aufweisen, oder die flüchtige Stoffe freisetzen können. Weiterhin bevorzugt sind Basen, die Elemente der 5. Hauptgruppe des Periodensystems der chemischen Elemente enthalten, insbesondere Stickstoff-haltige Basen und unter diesen ganz besonders Ammoniak. Weiterhin erfindungsgemäß einsetzbar sind Stoffe oder Stoffgemische, die mindestens ein primäres und/oder sekundäres und/oder tertiäres Amin umfassen. Überhaupt sind basische Stoffgemische in unterschiedlichster Zusammensetzung einsetzbar, wobei sie vorzugsweise mindestens eine Stickstoff-haltige Base enthalten.

Bevorzugt, aber nicht unbedingt erfolgt die basische Behandlung bei erhöhter Temperatur und/oder erhöhtem Druck.

Die zur Durchführung der verschiedenen Verfahrensschritte verwendete apparative Ausstattung ist erfindungsgemäß von untergeordneter Bedeutung. Wichtig ist bei der Auswahl der Trocknungseinrichtungen, Filter etc. lediglich, dass eine Kontamination des Siliciumdioxids mit Verunreinigungen im Rahmen der Verfahrensschritte ausgeschlossen ist. Welche Aggregate für die einzelnen Schritte unter dieser Prämisse Verwendung finden können, ist dem Fachmann hinlänglich bekannt und bedarf daher keiner weitergehenden Erläuterungen; bevorzugte Werkstoffe für Bauteile bzw. Bauteil-Oberflächen (Beschichtungen), die mit dem Siliciumdioxid in Kontakt kommen, sind unter den jeweiligen Verfahrensbedingungen stabile Polymere und/oder Quarzglas.

Die Siliciumdioxidgranulate zeichnen sich dadurch aus, dass sie Alkalimetall- und Erdalkalimetall-Gehalte zwischen 0,01 und 10,0 ppm, einen Bor-Gehalt zwischen 0,001 und 1,0 ppm, einen Phosphor-Gehalt zwischen 0,001 und 1,0 ppm, ein Stickstoff-Porenvolumen zwischen 0,01 und 1,5 ml/g und eine maximalen Porenausdehnung zwischen 5 und 500 nm, bevorzugt zwischen 5 und 200 nm, aufweisen. Das Stickstoff-Porenvolumen der Siliciumdioxidgranulate liegt bevorzugt zwischen 0,01 und 1,0 ml/g und insbesondere zwischen 0,01 und 0,6 ml/g.

Die weitergehende Analyse der Granulate hat ergeben, dass ihr Kohlenstoff-Gehalt zwischen 0,01 und 40,0 ppm und ihr ChlorGehalt zwischen 0,01 und 100,0 ppm beträgt; ppm-Angaben sind im Rahmen der vorliegenden Erfindung immer die Gewichtsanteile der betreffenden chemischen Elemente bzw. Struktureinheiten.

Für die Weiterverarbeitung der Siliciumdioxidgranulate eignen sich Korngrößenverteilungen zwischen 0,1 und 3000 µm, bevorzugt zwischen 10 und 1000 µm, besonders bevorzugt zwischen 100 und 800 µm. In einer bevorzugten, aber nicht zwingenden Ausführungsform erfolgt die Weiterverarbeitung in der Weise, dass das Granulat durch einen Heizschritt in Gegenwart einer definierten Wasserdampfkonzentration, die bevorzugt zunächst relativ hoch und anschließend reduziert ist, zu einem blasenarmen Glaskörper geschmolzen wird.

Die hochreinen Siliciumdioxidgranulate können für eine Vielzahl von Anwendungen verwendet werden, beispielsweise für die Herstellung von Quarzrohren und Quarztiegeln, für die Herstellung von optischen Fasern und als Füllstoffe für Epoxid-Formzusammensetzungen. Außerdem können die Produkte zur Sicherstellung guter Fließeigenschaften sowie hoher Packungsdichten in Formen zur Quarztiegel-Herstellung eingesetzt werden; diese Produkteigenschaften können auch zur Erzielung hoher Feststoffbeladungen bei Epoxid-Formzusammensetzungen nutzbar sein. Die Siliciumdioxidgranulate weisen Alkalimetall- bzw. Erdalkalimetall-Gehalte von jeweils unter 10 ppm auf und sind durch kleine Stickstoff-Porenvolumina von unter 1 ml/g charakterisiert.

Insbesondere im Korngrößenbereich von 50-2000 µm sintern die Produkte überraschenderweise zu nahezu blasenfreien Glaskörpern mit Silanolgruppen-Gehalten unter 150 ppm zusammen. Bevorzugt weisen die betreffenden Erzeugnisse Silanolgruppen-Gehalte (Gewichtsanteile der Silizium-gebundenen OH-Gruppen) zwischen 0,1 und 100 ppm, besonders bevorzugt zwischen 0,1 und 80 ppm und insbesondere zwischen 0,1 und 60 ppm auf.

Die Herstellung dieser hochwertigen Glaskörper gelingt im Übrigen, ohne dass irgendeine Behandlung mit Chlorierungsmitteln erfolgen muss und entbehrt bei der thermischen Behandlung auch der Verwendung spezieller Gase, wie Ozon oder Helium.

Als Rohstoffe zur Herstellung von Formkörpern für Quarzglas-Anwendungen jeglicher Art, also auch für hochtransparente Anwendungen, sind die Siliciumdioxidgranulate daher hervorragend geeignet. Insbesondere umfasst die Eignung die Herstellung von Erzeugnissen für die Elektronik- und die Halbleiterindustrie und die Fertigung von Glas- bzw.

Lichtwellenleitern. Außerdem eignen sich die Siliciumdioxidgranulate sehr gut für die Herstellung von Crucibles, wobei vor allem Crucibles für die Solarsilicium-Erzeugung hervorzuheben sind.

Weitere bevorzugte Anwendungsgebiete für die hochreinen Siliciumdioxidgranulate sind hochtemperfeste Isolationsstoffe, Füllstoffe für Polymere bzw. Harze, die nur sehr geringe Radioaktivitäten aufweisen dürfen und schließlich ihr Rohstoff-Einsatz bei der Herstellung von hochreinen Keramiken, Katalysatoren und Katalysatorenträgern.

Im Folgenden wird die Erfindung anhand von Beispielen beschrieben, ohne dass sich durch diese Beschreibung eine Beschränkung hinsichtlich der Anwendungsbreite der Erfindung ergeben soll:

### 1.) Herstellung des Siliciumdioxids gemäß den Verfahrensschritten a.-f.

Es wurden 1800 Liter 14.1%-ige Schwefelsäure vorgelegt und zu dieser Vorlage unter Umpumpen innerhalb einer Stunde 350 Liter einer wässrigen 37/40 Wasserglas-Lösung (Dichte = 1350 kg/m³, Na₂O-Gehalt = 8%, SiO₂-Gehalt = 26,8%, Modul %SiO₂/%Na₂O = 3,35) gegeben. Bei der Zugabe bildeten sich spontan millimetergroße Prillkörper, die eine durchströmbare Schüttung darstellten und es während der fortgesetzten Wasserglas-Zugabe ermöglichten, den Inhalt der Vorlage durch einen Siebboden mit 800 Liter/Stunde umzupumpen bzw. die flüssige Phase permanent zu homogenisieren.

Die Temperatur soll während der Zugabe der Wasserglas-Lösung einen Wert von 35°C nicht übersteigen; erforderlichenfalls muss die Einhaltung dieser Maximaltemperatur durch Kühlen der Vorlage gewährleistet werden. Nach vollständiger Wasserglas-Zugabe wurde die Innentemperatur auf 60°C angehoben und eine Stunde auf diesem Wert gehalten, bevor die Syntheselösung über den Siebboden abgelassen wurde.

Zum Waschen des erhaltenen Produkts wurde die Vorlage in ca. 20 Minuten mit 1230 Liter 60°C warmer 9.5%-iger Schwefelsäure aufgefüllt, ca. 20 Minuten umgepumpt und wieder abgelassen. Dieser Waschvorgang wurde anschließend noch dreimal mit 80°C heißer Schwefelsäure wiederholt; zunächst mit 16%-iger und dann noch zweimal mit 9%-iger Schwefelsäure. Abschließend wurde noch viermal in gleicher Weise mit 25°C warmer 0.7%-iger Schwefelsäure verfahren und danach bei Raumtemperatur so lange mit vollentsalztem bzw. VE-Wasser gewaschen, bis das Waschwasser eine Leitfähigkeit von 6 µS aufwies. Eine Trocknung des erhaltenen hochreinen Siliciumdioxids kann optional erfolgen.

### 2.) Herstellung des Siliciumdioxidgranulats gemäß den Verfahrensschritten g.-j.

### Beispiel 1

500 g des nach dem oben beschriebenen Verfahren hergestellten feuchten Siliciumdioxids (Feststoffgehalt 23.6%) wurden in einem 5 Liter-Kanister mit 500 g VE-Wasser und 50 g einer 25%-igen Ammoniaklösung versetzt. Nach kräftigem Umschütteln wurde diese Mischung mit zugeschraubtem Deckel über Nacht im Trockenschrank altern gelassen; die Temperatur betrug während des alkalischen Alterungsprozesses 80°C. Am Folgetag wurde das Produkt in ein 3000 ml-Becherglas (Quarzglas) überführt und dekantierend gewaschen. Insgesamt wurde fünfmal mit jeweils 500 ml VE-Wasser gewaschen; anschließend wurde das Produkt im Becherglas (Quarzglas), im auf 160°C temperierten Trockenschrank über Nacht getrocknet. Das trockene Produkt wurde zerkleinert und auf eine Fraktion von 250-350 µm abgesiebt. Von dieser Fraktion wurden 20 g in einem 1000 ml Becherglas (Quarzglas) im Muffelofen innerhalb von vier Stunden auf 1050°C erhitzt und eine Stunde bei dieser Temperatur gehalten; die langsame Abkühlung erfolgte durch Stehenlassen im Ofen.

Weitere 20 g der vorgenannten Siebfraktion wurden einer Sinterung bei 1250°C - unter ansonsten identischen Bedingungen-unterzogen. Von den beiden gesinterten Produkten und dem nach der Trockenschranktrocknung erhaltenen Material wurden die BET-Oberflächen und die Porenvolumina gemessen; außerdem wurden aus diesen Materialien Glasstäbe geschmolzen, die alle drei eine hohe Transparenz bzw. einen geringen Blasengehalt aufwiesen.

| | BET Messg. 1 [m²/g] | BET Messg. 2 [m²/g] | PV Messung 1 [cc/g] | PV Messung 2 [cc/g] |
|---|---|---|---|---|
| Ausgangsmaterial | 795 | 823 | 0,510 | 0,528 |
| Nach NH₃- und 160°C-Behandlung | 131 | 131 | 0,464 | 0,439 |
| Nach 1050°C-Behandlung | 81,2 | 80,4 | 0,269 | 0,274 |
| Nach 1250°C-Behandlung | 0,1 | 0,0 | 0,006 | 0,007 |

### Beispiel 2

2000 g des nach dem oben beschriebenen Verfahren hergestellten feuchten Siliciumdioxids (Feststoffgehalt 35%) wurden in einem 5 Liter-Kanister mit 2000 g VE-Wasser und 20 g einer 25%-igen Ammoniaklösung versetzt. Nach kräftigem Umschütteln wurde diese Mischung mit zugeschraubtem Deckel über Nacht im Trockenschrank altern gelassen; die Temperatur betrug während des alkalischen Alterungsprozesses 80°C. Am nächsten Tag wurde das Produkt in ein 5000 ml-Becherglas (Quarzglas) überführt und dekantierend gewaschen. Insgesamt wurde dreimal mit jeweils 1000 ml VE-Wasser gewaschen; anschließend wurde das Produkt in einer Porzellanschale, im auf 160°C temperierten Trockenschrank über Nacht getrocknet. Diese Verfahrensweise wurde mehrfach wiederholt, um eine Ausbeute von über 2000 g zu erhalten. Das trockene Produkt wurde in einem 3000 ml Quarzglas mit einem Quarzglaskolben zerdrückt und auf eine Fraktion von 125-500 µm abgesiebt.

600 g der Fraktion wurden in einem 3000 ml Quarzglas im Muffelofen innerhalb von acht Stunden auf 600°C geheizt und vier Stunden bei dieser Temperatur gehalten, bevor über Nacht abkühlen lassen wurde. Am nächsten Tag wurde dieselbe Probe in acht Stunden auf 1200°C geheizt und weitere vier Stunden auf dieser Temperatur gehalten; die Abkühlung erfolgte wieder über Nacht. Nach dem Zerkleinern des zusammengesinterten Produktes wurde nochmals über ein 500 µm-Sieb filtriert.

Sowohl von diesem gesinterten Material, als auch dem nur im Trockenschrank getrockneten Produkt wurden die BET-Oberflächen und die Porenvolumina gemessen; außerdem wurde aus den Produkten jeweils ein Glasstab geschmolzen. Von dem gesinterten Material wurde zusätzlich eine IR-spektroskopische Silanolgruppen-Bestimmung durchgeführt. Die bei Silanolgruppen-Bestimmungen angegebenen Werte entsprechen immer dem Gehalt von Silizium-gebundenen OH-Gruppen in (Gewichts-)ppm.

| | BET Messung [m²/g] | PV Messung [cc/g] | Silanolgruppengehalt (Granulat) | Silanolgruppengehalt (Glasstab) |
|---|---|---|---|---|
| Ausgangsmaterial | 828 | 0,545 | 77400 ppm | nicht bestimmbar |
| Nach NH₃- und 160°C-Behandlung | 149 | 0,492 | - | 82 ppm |
| Nach 1200°C-Behandlung | 0,1 | 0,004 | 395 ppm | 85 ppm |

### Vergleichsbeispiel

Mit einem Teil des in Beispiel 2 eingesetzten feuchten Siliciumdioxids (Feststoffgehalt 35%) wurde nach schonender Trocknung bei 50°C mittels Schwingsiebung eine Fraktion von 125-500 µm des Materials hergestellt, das ohne die erfindungsgemäße Behandlung zu einem Glasstab geschmolzen wurde. Der Versuch einer Messung des Silanolgruppengehalts scheiterte in diesem Fall am hohen Blasengehalt des Glasstabs bzw. die dadurch verursachte Intransparenz.

### Herstellung der Glasstäbe zur Bestimmung der Silanolgruppen-Gehalte:

Das zu schmelzende Siliciumdioxidgranulat wird in ein einseitig zugeschmolzenes Glasröhrchen gefüllt und im Hochvakuum evakuiert. Nachdem sich ein stabiles Vakuum eingestellt hat, wird der Glasstab mindestens 20 cm über dem Granulatspiegel zugeschmolzen. Anschließend wird das Pulver im Röhrchen mit einem Knallgasbrenner zu einem Glasstab geschmolzen. Der Glasstab wird in Scheiben von ca. 5 mm Dicke geschnitten und die planparallelen Endflächen werden blank poliert. Die genaue Dicke der Glasscheiben wird mit der Schublehre ausgemessen und in der Auswertung berücksichtigt. Die Scheiben werden in den Strahlengang eines IR-Messgerätes gespannt. Die IR-spektroskopische Bestimmung des Silanolgruppen-Gehalts erfolgt nicht im Randbereich der Scheibe, da dieser aus dem Material des das Schmelzgut einhüllenden Glasrohres besteht.

### Bestimmung der BET-Oberfläche und des Stickstoff-Porenvolumens:

Die spezifische Stickstoff-Oberfläche (BET-Oberfläche) wird gemäß ISO 9277 als Multipoint-Oberfläche bestimmt.
Zur Bestimmung des Porenvolumens wird das Messprinzip der Stickstoffsorption bei 77 K, also eine volumetrische Methode, herangezogen; dieses Verfahren eignet sich für mesoporöse Feststoffe mit einem Porendurchmesser von 2 nm bis 50 nm. Zunächst werden die amorphen Feststoffe im Trockenschrank getrocknet. Die Probenvorbereitung und die Messung erfolgen mit dem Gerät ASAP 2400 der Firma Micromeritics, wobei als Messgase Stickstoff 5.0 bzw. Helium 5.0 und als Kältebad flüssiger Stickstoff eingesetzt werden. Einwaagen werden auf einer Analysenwaage mit einer Genauigkeit von 1/10 mg vorgenommen.

Die zu untersuchende Probe wird bei 105°C für 15-20 Stunden vorgetrocknet. Von der vorgetrockneten Substanz werden 0,3 g bis 1,0 g in ein Probengefäß eingewogen. Das Probengefäß wird an das Gerät ASAP 2400 angeschlossen und bei 200°C für 60 Minuten unter Vakuum ausgeheizt (Endvakuum < 10 µm Hg). Die Probe wird unter Vakuum auf Raumtemperatur abkühlen lassen, mit Stickstoff überschichtet und gewogen. Die Differenz zum Gewicht des mit Stickstoff gefüllten Probengefäßes ohne Feststoff ergibt die exakte Einwaage. Die Messung erfolgt gemäß der Bedienungsanleitung des Gerätes ASAP 2400.

Zur Auswertung des Stickstoff-Porenvolumens (Porendurchmesser < 50 nm) wird das adsorbierte Volumen anhand des Desorptionsastes (Porenvolumen für Poren mit einem Porendurchmesser < 50 nm) ermittelt.

## Patentansprüche

1. Verfahren zur Herstellung von hochreinem Siliciumdioxidgranulat, bei dem zu einer ein Säuerungsmittel enthaltenden Vorlage mit einem pH-Wert von kleiner 2,0 eine Silikatlösung gegeben wird, deren Viskosität von 0,1 bis 10000 dPa.s (Poise) beträgt, mit der Maßgabe, dass der pH-Wert während der Zugabe jederzeit unter 2,0 liegt, bei dem das erhaltene Siliciumdioxid anschließend mindestens einmal mit einem sauren Waschmedium behandelt wird, dessen pH-Wert unter 2,0 beträgt, bevor es in neutral gewaschenem Zustand einer basischen Behandlung ausgesetzt wird und schließlich die Abtrennung einer Korngrößen-Fraktion im Bereich von 200-1000 µm und deren Sinterung bei mindestens 600°C erfolgt.

2. Verfahren nach Anspruch 1, bei dem der pH-Wert der das Säuerungsmittel enthaltenden Vorlage kleiner 1,5 ist.

3. Verfahren nach Anspruch 1, bei dem der pH-Wert der das Säuerungsmittel enthaltenden Vorlage kleiner 1,0 ist.

4. Verfahren nach Anspruch 1, bei dem der pH-Wert der das Säuerungsmittel enthaltenden Vorlage kleiner 0,5 ist.

5. Verfahren nach einem der Ansprüche 1 bis 4, bei dem die Viskosität der zugegebenen Silikatlösung von 0,4 bis 1000 dPa.s (Poise) beträgt.

6. Verfahren nach einem der Ansprüche 1 bis 4, bei dem die Viskosität der zugegebenen Silikatlösung mehr als 5 dPa.s (Poise) beträgt.

7. Verfahren nach einem der Ansprüche 1 bis 4, bei dem die Viskosität der zugegebenen Silikatlösung weniger als 2 dPa.s (Poise) beträgt.

8. Verfahren nach einem der Ansprüche 1 bis 7, bei dem der pH-Wert während der Zugabe der Silikatlösung jederzeit unter 1,5 und der pH-Wert des Waschmediums ebenfalls unter 1,5 beträgt.

9. Verfahren nach einem der Ansprüche 1 bis 7, bei dem der pH-Wert während der Zugabe der Silikatlösung jederzeit unter 1,0 und der pH-Wert des Waschmediums ebenfalls unter 1,0 beträgt.

10. Verfahren nach einem der Ansprüche 1 bis 7, bei dem der pH-Wert während der Zugabe der Silikatlösung jederzeit unter 0,5 und der pH-Wert des Waschmediums ebenfalls unter 0,5 beträgt.

11. Verfahren nach einem der Ansprüche 1 bis 10, bei dem das Siliciumdioxid vor der basischen Behandlung so lange neutral gewaschen wird bis das dafür verwendete VE-Wasser eine Leitfähigkeit von unter 100 µS, bevorzugt unter 10 µS aufweist.

12. Verfahren nach einem der Ansprüche 1 bis 11, bei dem die basische Behandlung des Siliciumdioxids mit einer Stickstoffhaltigen Base erfolgt.

13. Verfahren nach Anspruch 12, bei dem die Stickstoff-haltige Base Ammoniak ist.

14. Verfahren nach Anspruch 12, bei dem die Stickstoff-haltige Base ein primäres und/oder sekundäres und/oder tertiäres Amin ist oder umfasst.

15. Verfahren nach einem der Ansprüche 1 bis 14, bei dem die basische Behandlung bei erhöhter Temperatur und/oder erhöhtem Druck erfolgt.

16. Verfahren nach einem der Ansprüche 1 bis 15, bei dem das Siliciumdioxid nach der basischen Behandlung mit VE-Wasser gewaschen, getrocknet und zerkleinert wird.

17. Verfahren nach einem der Ansprüche 1 bis 16, bei dem eine Korngrößen-Fraktion im Bereich von 200-600 µm abgetrennt wird.

18. Verfahren nach einem der Ansprüche 1 bis 16, bei dem eine Korngrößen-Fraktion im Bereich von 200-400 µm abgetrennt wird.

19. Verfahren nach einem der Ansprüche 1 bis 16, bei dem eine Korngrößen-Fraktion im Bereich von 250-350 µm abgetrennt wird.

20. Verfahren nach einem der Ansprüche 1 bis 19, bei dem die Sinterung der abgetrennten Korngrößen-Fraktion bei mindestens 1000°C erfolgt.

21. Verfahren nach einem der Ansprüche 1 bis 19, bei dem die Sinterung der abgetrennten Korngrößen-Fraktion bei mindestens 1200°C erfolgt.

## Claims

1. Process for producing high-purity silica granules, in which a silicate solution with a viscosity of 0.1 to 10 000 dPa.s (poise) is added to an initial charge which comprises an acidifier and has a pH of less than 2.0, with the proviso that the pH during the addition is always below 2.0, in which the silica obtained is subsequently treated at least once with an acidic wash medium with a pH below 2.0 before, having been washed to neutrality, it is subjected to a basic treatment, and finally a particle size fraction in the range of 200-1000 µm is removed and sintered at at least 600°C.

2. Process according to Claim 1, in which the pH of the initial charge comprising the acidifier is less than 1.5.

3. Process according to Claim 1, in which the pH of the initial charge comprising the acidifier is less than 1.0.

4. Process according to Claim 1, in which the pH of the initial charge comprising the acidifier is less than 0.5.

5. Process according to any of Claims 1 to 4, in which the viscosity of the added silicate solution is 0.4 to 1000 dPa.s (poise).

6. Process according to any of Claims 1 to 4, in which the viscosity of the added silicate solution is more than 5 dPa.s (poise).

7. Process according to any of Claims 1 to 4, in which the viscosity of the added silicate solution is less than 2 dPa.s (poise).

8. Process according to any of Claims 1 to 7, in which the pH during the addition of the silicate solution is always below 1.5 and the pH of the wash medium is likewise below 1.5.

9. Process according to any of Claims 1 to 7, in which the pH during the addition of the silicate solution is always below 1.0 and the pH of the wash medium is likewise below 1.0.

10. Process according to any of Claims 1 to 7, in which the pH during the addition of the silicate solution is always below 0.5 and the pH of the wash medium is likewise below 0.5.

11. Process according to any of Claims 1 to 10, in which the silica before the basic treatment is washed to neutrality until the demineralized water used for that purpose has a conductivity of below 100 µS, preferably below 10 µS.

12. Process according to any of Claims 1 to 11, in which the basic treatment of the silica is effected with a nitrogen base.

13. Process according to Claim 12, in which the nitrogen base is ammonia.

14. Process according to Claim 12, in which the nitrogen base is or comprises a primary and/or secondary and/or tertiary amine.

15. Process according to any of Claims 1 to 14, in which the basic treatment is effected at elevated temperature and/or elevated pressure.

16. Process according to any of Claims 1 to 15, in which the silica after the basic treatment with demineralized water is washed, dried and comminuted.

17. Process according to any of Claims 1 to 16, in which a particle size fraction in the range of 200-600 µm is removed.

18. Process according to any of Claims 1 to 16, in which a particle size fraction in the range of 200-400 µm is removed.

19. Process according to any of Claims 1 to 16, in which a particle size fraction in the range of 250-350 µm is removed.

20. Process according to any of Claims 1 to 19, in which the particle size fraction removed is sintered at at least 1000°C.

21. Process according to any of Claims 1 to 19, in which the particle size fraction removed is sintered at at least 1200°C.

## Revendications

1. Procédé pour la production de granulé de dioxyde de silicium très pur, dans lequel on ajoute à une charge préalable contenant un agent d'acidification, ayant un pH inférieur à 2,0, une solution de silicate dont la viscosité vaut de 0,1 à 10 000 dPa.s (poises), étant entendu que pendant l'addition le pH est à tout moment inférieur à 2,0, dans lequel le dioxyde de silicium obtenu est ensuite traité au moins une fois par un milieu de lavage acide, dont le pH est inférieur à 2,0, avant d'être, à l'état lavé à neutralité, exposé à un traitement basique, et enfin s'effectuent la séparation d'une fraction granulométrique dans la plage de 200 - 1 000 µm et son frittage à au moins 600 °C.

2. Procédé selon la revendication 1, dans lequel le pH de la charge préalable contenant l'agent d'acidification est inférieur à 1,5.

3. Procédé selon la revendication 1, dans lequel le pH de la charge préalable contenant l'agent d'acidification est inférieur à 1,0.

4. Procédé selon la revendication 1, dans lequel le pH de la charge préalable contenant l'agent d'acidification est inférieur à 0,5.

5. Procédé selon l'une quelconque des revendications 1 à 4, dans lequel la viscosité de la solution de silicate ajoutée vaut de 0,4 à 1 000 dPa.s (poises).

6. Procédé selon l'une quelconque des revendications 1 à 4, dans lequel la viscosité de la solution de silicate ajoutée vaut plus de 5 dPa.s (poises).

7. Procédé selon l'une quelconque des revendications 1 à 4, dans lequel la viscosité de la solution de silicate ajoutée vaut moins de 2 dPa.s (poises).

8. Procédé selon l'une quelconque des revendications 1 à 7, dans lequel le pH pendant l'addition de la solution de silicate est à tout moment inférieur à 1,5 et le pH du milieu de lavage est également inférieur à 1,5.

9. Procédé selon l'une quelconque des revendications 1 à 7, dans lequel le pH pendant l'addition de la solution de silicate est à tout moment inférieur à 1,0 et le pH du milieu de lavage est également inférieur à 1,0.

10. Procédé selon l'une quelconque des revendications 1 à 7, dans lequel le pH pendant l'addition de la solution de silicate est à tout moment inférieur à 0,5 et le pH du milieu de lavage est également inférieur à 0,5.

11. Procédé selon l'une quelconque des revendications 1 à 10, dans lequel le dioxyde de silicium avant le traitement basique est lavé à neutralité jusqu'à ce que l'eau totalement déminéralisée utilisée à cet effet présente une conductivité inférieure à 100 µS, de préférence inférieure à 10 µS.

12. Procédé selon l'une quelconque des revendications 1 à 11, dans lequel le traitement basique du dioxyde de silicium s'effectue avec une base azotée.

13. Procédé selon la revendication 12, dans lequel la base azotée est l'ammoniac.

14. Procédé selon la revendication 12, dans lequel la base azotée est une amine primaire et/ou une amine secondaire et/ou une amine tertiaire.

15. Procédé selon l'une quelconque des revendications 1 à 14, dans lequel le traitement basique s'effectue à température élevée et/ou sous pression élevée.

16. Procédé selon l'une quelconque des revendications 1 à 15, dans lequel après le traitement basique le dioxyde de silicium est lavé avec de l'eau totalement déminéralisée, séché et fragmenté.

17. Procédé selon l'une quelconque des revendications 1 à 16, dans lequel on sépare une fraction granulométrique dans la plage de 200-600 µm.

18. Procédé selon l'une quelconque des revendications 1 à 16, dans lequel on sépare une fraction granulométrique dans la plage de 200-400 µm.

19. Procédé selon l'une quelconque des revendications 1 à 16, dans lequel on sépare une fraction granulométrique dans la plage de 250-350 µm.

20. Procédé selon l'une quelconque des revendications 1 à 19, dans lequel le frittage de la fraction granulométrique séparée s'effectue à au moins 1 000 °C.

21. Procédé selon l'une quelconque des revendications 1 à 19, dans lequel le frittage de la fraction granulométrique séparée s'effectue à au moins 1 200 °C.
